# EUROPÄISCHE PATENTSCHRIFT

(11) **EP 1 687 554 B1**
(45) Veröffentlichungstag und Bekanntmachung des Hinweises auf die Patenterteilung: **08.10.2014**
(21) Anmeldenummer: 04797257.5
(22) Anmeldetag: 19.11.2004
(51) Int. Cl.: F16J 3/04

(54) **DICHTUNG ZUR ABDICHTUNG ZWISCHEN TEILEN MIT BEGRENZTER BEWEGLICHKEIT**
SEAL FOR EFFECTING A SEALING BETWEEN PARTS HAVING LIMITED MOBILITY
ELEMENT D'ETANCHEITE SERVANT A REALISER UNE ETANCHEITE ENTRE DES PIECES A MOBILITE LIMITEE

(30) Priorität: 26.11.2003 CH 201103
(43) Veröffentlichungstag der Anmeldung: 09.08.2006
(73) Patentinhaber: Weidmann Plastics Technology AG, 8640 Rapperswil (CH)
(72) Erfinder: OTT, Josef, CH-8735 St. Gallenkappel (CH)
(74) Vertreter: Rutz, Andrea
(86) Internationale Anmeldenummer: PCT/CH2004/000700
(87) Internationale Veröffentlichungsnummer: WO 2005/052415

(56) Entgegenhaltungen:
- EP-A- 0 213 977
- DE-A- 10 061 427
- US-A- 4 592 338

## Beschreibung

Die Erfindung betrifft eine Dichtung nach dem Oberbegriff des Anspruchs 1.

Solche Dichtungen werden insbesondere im Kraftfahrzeugbau verwendet. Sie dienen beispielsweise zum Abdichten eines Steuerhebels oder einer Wischerachse. Diese Dichtungen sind als Dichtungsbälge oder Membranen ausgebildet und weisen jeweils eine Hüllwand auf, die aus einem nachgiebigen oder flexiblen Werkstoff, insbesondere aus Gummi, hergestellt ist. An solche Dichtungen werden die Anforderung gestellt, dass sie bei ausreichender Dichtwirkung langlebig sind, kostengünstig herstellbar sowie einfach montierbar sind.

Die gattungsbildende DE-A-100 61 427 offenbart eine Manschette zum Abdichten einer Lenkwelle bzw. Lenksäule. Die Manschette besitzt zum Abdichten der Lenkwelle einen rohrförmigen Abschnitt mit einem in diesen eingesetzten Teflonring.

Bekannt ist eine Gummitülle zum Abdichten einer Wischerachse. Bei dieser erstreckt sich zwischen dem Flansch eine konvexe Wandung, welche mittig mit der genannten ersten Durchgangsöffnung zum Abdichten der Wischerachse versehen ist. Bei dieser besteht das Problem, dass sich bei einer seitlichen Bewegung der Wischerachse diese verstreckt und undicht wird. Zudem sind die Herstellungskosten vergleichsweise hoch.

Der Erfindung liegt die Aufgabe zugrunde, eine Dichtung der genannten Art zu schaffen, welche sich insbesondere zum Abdichten einer Wischerachse eignet und die wesentlich kostengünstiger herstellbar ist. Die Herstellung soll weitgehend automatisch im Spritzgussverfahren möglich sein. Zudem soll die Dichtung optisch ansprechend sein.

Die Aufgabe ist bei einer gattungsgemässen Dichtung gemäss Anspruch 1 gelöst. Bei der erfindungsgemässen Dichtung lässt sich die genannte erste Durchgangsöffnung seitlich vergleichsweise weit bewegen, ohne dass dadurch wesentliche Kräfte auf den Umfangsrand bzw. Flansch ausgeübt werden. Die Dichtung kann zudem einstückig im Spritzgussverfahren hergestellt werden.

Eine optisch besonders ansprechende Ausgestaltung ist möglich, da gemäss der Erfindung an der genannten Wandung aussenseitig ein Kragen angeformt ist, der mit einem Rand die zweite Durchgangsöffnung untergreift. Aussenseitig wirkt die Dichtung dadurch geschlossen und ästetisch besonders ansprechend.

Eine besonders kostengünstige Herstellung ist dann möglich, wenn gemäss einer Weiterbildung der Erfindung der genannte Kragen ausstülpbar ist. Die Dichtung kann dann mit ausgestülptem Kragen hergestellt werden. Nach dem Spritzgiessen wird der Kragen eingestülpt, sodass er die zweite Durchgangsöffnung untergreift. Der Kragen wird bei einer seitlichen Bewegung der ersten Durchgangsöffnung bezüglich des Flansches verschoben, bleibt hierbei aber immer in der zweiten Durchgangsöffnung und dichtet diese gegen aussen ab.

Weitere vorteilhafte Merkmale ergeben sich aus den abhängigen Patentansprüchen, der nachfolgenden Beschreibung sowie der Zeichnung.

Ein Ausführungsbeispiel der Erfindung wird anhand der Zeichnung näher erläutert. Es zeigen:
- Fig. 1: ein Schnitt durch eine montierte erfindungsgemässe Dichtung,
- Fig. 2: ein Schnitt durch eine erfindungsgemässe Dichtung, wie sie nach der Herstellung im Spritzgussverfahren nach dem Entformen ausgebildet ist,
- Fig. 3 + 4: schematisch eine Ansicht einer montierten Dichtung zur Illustration der seitlichen Bewegbarkeit der ersten Durchgangsöffnung und
- Fig. 5: schematisch ein Schnitt durch eine erfindungsgemässe Dichtung nach einer Variante.

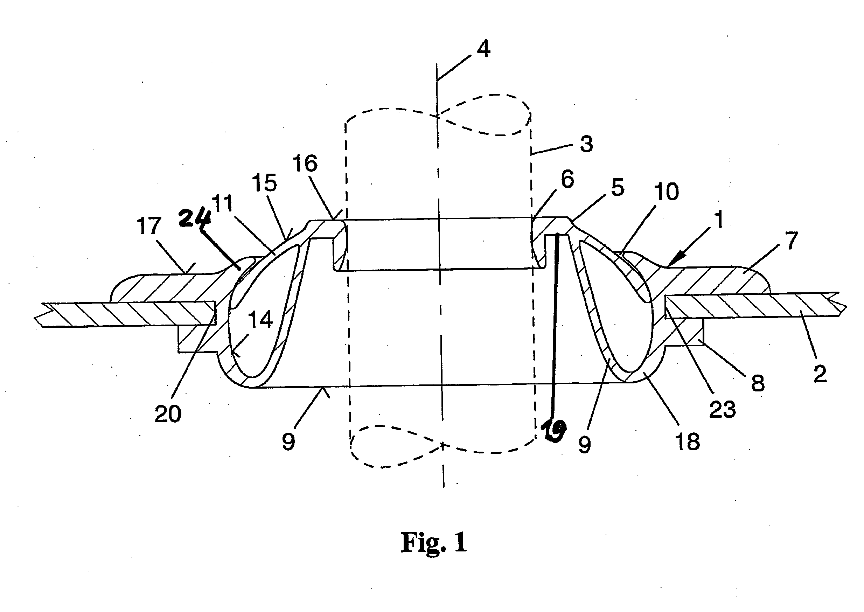

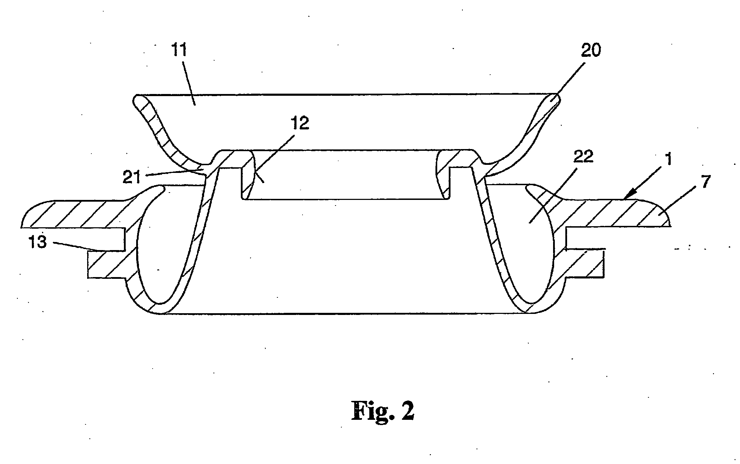

Die in Figur 1 gezeigte Dichtung 1 weist einen gummielastischen Körper 5 auf und ist in eine Öffnung 23 eines Gehäuses 2 oder Gehäuseteils eingesetzt. Ein Rand 20 der Öffnung 23 greift in eine umlaufende Nut 13 (Fig. 2) des Körpers 2 ein. Oberseitig liegt am Gehäuse 2 ein Umfangsrand 7 an, der eine Dichtlippe bildet. Unterseitig liegt am Gehäuse 2 ein radial vorstehender Flansch 8 an, der am Körper 5 angeformt ist. Der Körper 5 besteht aus einem gummielastischen thermoplastischen Kunststoff und ist vorzugsweise einstückig im Spritzgussverfahren hergestellt. Das Gehäuse 2 kann an sich durch irgendeine vergleichsweise dünne Wand gebildet sein.

Eine vergleichsweise dünne Wandung 9 weist mittig eine Durchgangsöffnung 6 auf, die innenseitig eine Dichtfläche 12 (Fig. 2) bildet. Die Durchgangsöffnung 6 nimmt einen Schaft 3 auf, der beispielsweise die Achse eines Scheibenwischers oder der Schaft eines Schalthebels ist. Die Durchgangsöffnung 6 kann aber auch ein anderes Teil, beispielsweise ein Kabel aufnehmen. Die Dichtung 1 dichtet die Aussenseite 15 des Schaftes 3 gegenüber dem Gehäuse 2 ab. In die Durchgangsöffnung 6 kann alternativ ein hier nicht gezeigter Gleitring eingesetzt sein, welcher die genannte Dichtfläche 12 bildet und der aus einem härteren Kunststoff hergestellt sein kann.

Die Wandung 9 erstreckt sich wie ersichtlich von der Rückseite 19 des Gehäuses 2 auf die Vorderseite 17 und durch eine zweite Durchgangsöffnung 10 hindurch. Diese Durchgangsöffnung 10 wird durch eine umlaufende Lippe 24 gebildet, die wie ersichtlich nach innen geneigt und am Umfangsrand 7 angeformt ist. An der Wandung 9 ist zudem im Bereich der Öffnung 6 aussenseitig ein Kragen 11 angeformt, der eine vergleichsweise dünne Wandung bildet und der in einen Ringraum 22 (Fig. 2) eingestülpt ist. Dieser Kragen 11 liegt mit einem umlaufenden Rand 20 elastisch an einer Innenseite 14 der Dichtlippe 24 an.

Die Dichtung 1 wird im Spritzgussverfahren so hergestellt, dass gemäss Fig. 2 der Kragen 11 ausgestülpt und kelchförmig nach oben gerichtet ist. Der Kragen 11 wird dann in die in Fig. 1 gezeigte Position eingestülpt, was automatisch erfolgen kann. Der Kragen 11 besitzt gemäss Fig. 2 eine umlaufende Ansatzstelle 21, die nahe einer Frontseite 16 (Fig. 1) angeordnet ist. Diese Ansatzstelle 21 befindet sich im Abstand zu einer in Fig. 1 gezeigten Biegung 18, an welcher die Wandung 9 um etwa 180° umgelenkt ist. Da die Wandung 9 vergleichsweise dünn und flexibel ist, werden seitliche Verschiebungen im Bereich der ersten Durchgangsöffnung 6 nur geringfügig auf den Flansch 8 und den Umfangsrand 7 übertragen. Ebenfalls werden Bewegungen am Gehäuse 2 nur geringfügig auf die Dichtfläche 12 übertragen. Die Dichtung 1 kann damit vergleichsweise grosse Relativbewegungen zwischen dem Schaft 3 und dem Gehäuse 2 quer zur Achse 4 des Schaftes 3 aufnehmen. Dies gilt auch dann, wenn in die Durchgangsöffnung 6 wie oben erwähnt ein Gleitring aus einem härteren Kunststoff eingesetzt ist. Wesentlich ist auch, dass die Öffnung 23 vergleichsweise klein gehalten werden kann, ohne dass die genannte Beweglichkeit quer zur Achse 4 beeinträchtigt würde.

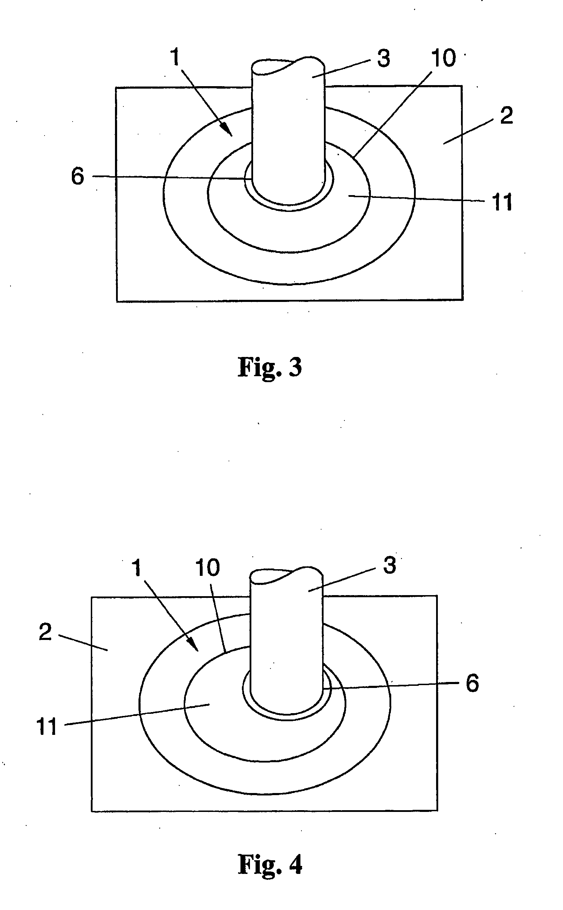

Die Dichtung 1 hat gemäss den Fig. 3 und 4 in der Draufsicht das Erscheinungsbild eines Auges, wobei der Kragen 11 mit der ersten Durchgangsöffnung 6 das Auge bildet. Der Kragen 11 mit der Durchgangsöffnung 6 kann ähnlich einem Auge um einen Punkt bewegt werden, wobei die Wandung 9 deformiert wird. In der Fig. 4 ist eine solche seitliche Verschiebung des Schaftes 3 gezeigt. Zusätzlich können auch Kippbewegungen und sich überlagernde Quer- und Kippbewegungen aufgenommen werden. Es können aber auch andere Relativbewegungen zwischen dem Schaft 3 und dem Gehäuse 2 ohne Beeinträchtigung der Dichtwirkung durch eine Deformation der Wandung 9 aufgenommen werden. Die Dichtung 1 ist somit wie ein üblicher Faltenbalg anpassbar, wirkt aber von der Aussenseite des Gehäuses wesentlich kompakter und beansprucht eine kleinere Gehäuseöffnung 23.

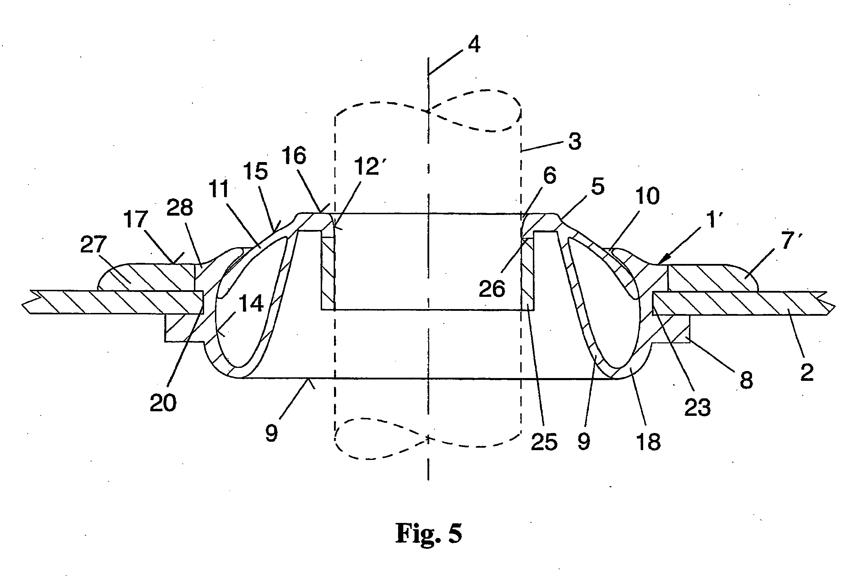

Die in Fig. 5 gezeigte Dichtung 1' unterscheidet sich von der Dichtung 1 durch eine angespritzte Lagerbuchse 25 und einen ebenfalls angespritzten Ring 27. Die Lagerbuchse 5 besteht aus einem härteren Kunststoff als der an einem über einem Zweikomponenten-Verbund 26 anschliessenden und eine umlaufende Dichtfläche 12' bildender Kunststoff. Die sich nach innen erstreckende und von der Aussenseite nicht sichtbare Lagerbuchse 25 gewährleistet eine besonders gleichmässige Krafteinleitung und verhindert bei Quer- und Kippbewegungen der Achse 4 eine Deformation der Dichtfläche 12'.

Der Ring 27 besteht ebenfalls aus einem härteren Kunststoff als der an einem Zweikomponenten-Verbund 28 angrenzende Kunststoff und gewährleistet eine besonders sichere Verbindung des Umfangrandes 7' mit dem Gehäuse 2.

### Bezugszeichenliste

- 1.: Dichtung
- 2.: Gehäuse
- 3.: Schaft
- 4.: Achse
- 5.: Körper
- 6.: erste Durchgangsöffnung
- 7.: Umfangsrand
- 8.: Flansch
- 9.: Wandung
- 10.: zweite Durchgangsöffnung
- 11.: Kragen
- 12.: Dichtfläche
- 13.: Nut
- 14.: Innenseite
- 15.: Aussenseite
- 16.: Frontseite
- 17.: Vorderseite
- 18.: Biegung
- 19.: Rückseite
- 20.: Rand
- 21.: Ansatzstelle
- 22.: Ringkanal
- 23.: Gehäuseöffnung
- 24.: Lippe
- 25.: Lagerbuchse
- 26.: Zweikomponenten-Verbund
- 27.: Ring
- 28.: Zweikomponenten-Verbund

## Patentansprüche

1. Dichtung zur Abdichtung zwischen Teilen (2, 3) mit begrenzter Beweglichkeit, mit einem gummielastischen Körper (5), der mittig eine erste Durchgangsöffnung (6) zur Aufnahme des einen Teils (3) und in einem Umfangsrand (7) einen Flansch (8) zur lösbaren Befestigung des Körpers (5) in einer Öffnung (23) des anderen Teils (2) aufweist, wobei die erste Durchgangsöffnung (6) in einer Wandung (9) angeordnet ist, die sich von einer Vorderseite (17) gegen eine Rückseite (19) des Körpers (5) durch eine wesentlich grössere zweite Durchgangsöffnung (10) des Umfangsrandes (7) hindurcherstreckt, derart, dass die genannte Wandung (9) und die erste Durchgangsöffnung (6) sich in der Art eines Auges im Umfangsrand (7) bewegen lassen, **dadurch gekennzeichnet, dass** an der genannten Wandung (9) aussenseitig ein Kragen (11) angeformt ist, der mit einem Rand (20) die zweite Durchgangsöffnung (10) untergreift und dass der Kragen (11) eine nach innen gerichtete Lippe (24) untergreift.

2. Dichtung nach Anspruch 1, **dadurch gekennzeichnet, dass** der Kragen (11) nach aussen ausstülpbar ist.

3. Dichtung nach Anspruch 1 oder 2, **dadurch gekennzeichnet, dass** der Kragen (11) in der Nähe der ersten Durchgangsöffnung (6) an der Wandung (9) angeformt ist.

4. Dichtung nach Anspruch 3, **dadurch gekennzeichnet, dass** der Kragen (11) kelchartig ausstülpbar ist.

5. Dichtung nach einem der Ansprüche 1 bis 4, **dadurch gekennzeichnet, dass** sich die ersten Durchgangsöffnung (6) über der zweiten Durchgangsöffnung (10) befindet.

6. Dichtung nach einem der Ansprüche 1 bis 5, **dadurch gekennzeichnet, dass** sie für ein Kraftfahrzeug vorgesehen ist.

7. Dichtung nach einem der Ansprüche 1 bis 6, **dadurch gekennzeichnet, dass** sie eine Wischertülle ist.

8. Dichtung nach einem der Ansprüche 1 bis 7, **dadurch gekennzeichnet, dass** in die erste Durchgangsöffnung (6) ein Gleitring eingesetzt ist.

9. Dichtung nach einem der Ansprüche 1 bis 8, **dadurch gekennzeichnet, dass** eine Lagerbuchse (25) aus einem härteren Kunststoff angeformt ist.

10. Dichtung nach Anspruch 9, **dadurch gekennzeichnet, dass** die Lagerbuchse (25) im Bereich einer Dichtfläche (12') angeformt ist, die durch einen weicheren Kunststoff gebildet ist.

11. Dichtung nach einem der Anspruch 1 bis 10, **dadurch gekennzeichnet, dass** am Umfangsrand (7') ein Ring (27) aus härterem Kunststoff angeformt ist.

## Claims

1. A seal for effecting a sealing between parts (2, 3) having limited mobility, comprising an elastomeric body (5), which in the middle has a first through opening (6) for receiving the one part (3) and in a peripheral rim (7) has a flange (8) for detachably fastening the body (5) in an opening (23) of the other part (2), wherein the first through opening (6) is disposed in a wall (9) which extends from a front side (17) toward a rear side (19) of the body (5) through a substantially larger second through opening (10) of the peripheral rim (7), such that said wall (9) and the first through opening (6) can be moved within the peripheral rim (7) in the manner of an eye, **characterized in that** a collar (11) is formed onto the outside of said wall (9), which collar undergrips with a rim (20) the second through opening (10), and the collar (11) undergrips an inwardly directed lip (24).

2. The seal as claimed in claim 1, **characterized in that** the collar (11) can be turned outward.

3. The seal as claimed in claim 1 or 2, **characterized in that** the collar (11) is formed onto the wall (9) close to the first through opening (6).

4. The seal as claimed in claim 3, **characterized in that** the collar (11) is turned outward in the shape of a cup.

5. The seal as claimed in one of claims 1 to 4, **characterized in that** the first through opening (6) is located above the second through opening (10).

6. The seal as claimed in one of claims 1 to 5, **characterized in that** it is intended for a motor vehicle.

7. The seal as claimed in one of claims 1 to 6, **characterized in that** it is a wiper sleeve.

8. The seal as claimed in one of claims 1 to 7, **characterized in that** a face seal ring is inserted in the first through opening (6).

9. The seal as claimed in one of claims 1 to 8, **characterized in that** a bearing bushing (25) made of a harder plastic is formed on.

10. The seal as claimed in claim 9, **characterized in that** the bearing bushing (25) is formed on in the region of a sealing surface (12') formed by a softer plastic.

11. The seal as claimed in one of claims 1 to 10, **characterized in that** a ring (27) made of harder plastic is formed onto the peripheral rim (7').

## Revendications

1. Élément d'étanchéité servant à réaliser l'étanchéité entre des pièces (2, 3) avec une mobilité limitée, comprenant un corps (5) ayant l'élasticité du caoutchouc, qui présente centralement une première ouverture de passage (6) pour recevoir l'une des pièces (3), et dans un bord périphérique (7), une bride (8) pour la fixation amovible du corps (5) dans une ouverture (23) de l'autre partie (2), la première ouverture de passage (6) étant disposée dans une paroi (9) qui s'étend depuis un côté avant (17) vers un côté arrière (19) du corps (5) à travers une deuxième ouverture de passage (10) essentiellement plus grande du bord périphérique (7), de telle sorte que ladite paroi (9) et la première ouverture de passage (6) puissent être déplacées à la manière d'un oeillet dans le bord périphérique (7), **caractérisé en ce qu'**au niveau de ladite paroi (9) du côté extérieur, est façonné un rebord (11) qui vient en prise par le dessous par un bord (20) avec la deuxième ouverture de passage (10) et **en ce que** le rebord (11) vient en prise par le dessous avec une lèvre (24) orientée vers l'intérieur.

2. Élément d'étanchéité selon la revendication 1, **caractérisé en ce que** le rebord (11) peut être replié vers l'extérieur.

3. Élément d'étanchéité selon la revendication 1 ou 2, **caractérisé en ce que** le rebord (11) est façonné à proximité de la première ouverture de passage (6) au niveau de la paroi (9).

4. Élément d'étanchéité selon la revendication 3, **caractérisé en ce que** le rebord (11) peut être replié en forme de bidon.

5. Élément d'étanchéité selon l'une quelconque des revendications 1 à 4, **caractérisé en ce que** la première ouverture de passage (6) se trouve au-dessus de la deuxième ouverture de passage (10).

6. Élément d'étanchéité selon l'une quelconque des revendications 1 à 5, **caractérisé en ce qu'**il est prévu pour un véhicule automobile.

7. Élément d'étanchéité selon l'une quelconque des revendications 1 à 6, **caractérisé en ce qu'**il s'agit d'une gaine d'essuie-glace.

8. Élément d'étanchéité selon l'une quelconque des revendications 1 à 7, **caractérisé en ce qu'**une bague glissante est insérée dans la première ouverture de passage (6).

9. Élément d'étanchéité selon l'une quelconque des revendications 1 à 8, **caractérisé en ce qu'**une douille palier (25) est façonnée en un matériau en plastique relativement dur.

10. Élément d'étanchéité selon la revendication 9, **caractérisé en ce que** la douille palier (25) est façonnée dans la région d'une face d'étanchéité (12'), laquelle est formée par un plastique plus souple.

11. Élément d'étanchéité selon l'une quelconque des revendications 1 à 10, **caractérisé en ce qu'**une bague (27) en matériau plus dur est façonnée au niveau du bord périphérique (7').
